# EUROPEAN PATENT APPLICATION

(11) **EP 4 262 220 A1**
(43) Date of publication of application: **18.10.2023**
(21) Application number: 22168269.3
(22) Date of filing: 13.04.2022
(51) Int. Cl.: H04N 21/44, H04N 17/00, H04L 65/80, H04L 41/5067, H04N 21/239

(54) **A CUSTOMER PREMISES EQUIPMENT WITH A NETWORK PROBE AND A METHOD FOR MONITORING QUALITY OF SERVICE IN AN IPTV CONTENT DELIVERY NETWORK**

(71) Applicant: Advanced Digital Broadcast S.A., 1293 Bellevue (CH)
(72) Inventor: ZAJAKALA, Mateusz, 65-119 Zielona Gora (PL); JOZWIAK, Tomasz, 65-119 Zielona Gora (PL)
(74) Representative: Kancelaria Eupatent.pl Sp. z.o.o

(57) **Abstract**

A customer premises equipment (CPE) comprising a controller (310) and a data reception block (320) configured for reception of internet protocol television (IPTV) streams, characterized in that the controller is configured to operate a software network probe (312) that is configured to monitor received IPTV streams with quality metrics.

## Description

### TECHNICAL FIELD

The present invention relates to monitoring Quality of Service (QoS) in IP networks, in particular IP networks for delivering Internet Protocol Television content.

### BACKGROUND

Internet Protocol Television (IPTV) is the delivery of television content over Internet Protocol (IP) networks. Unlike downloaded media, IPTV offers the ability to stream the source media continuously. As a result, a client media player can begin playing the content (such as a TV channel) almost immediately. Typically, client media players are dedicated devices called IPTV Set Top Boxes (STBs), connected between the IP network and a user's television set.

In order to provide high Quality of Service (QoS) to IPTV users, Internet Service Providers (ISPs) providing video services in managed IPTV and unmanaged open networks need to be able to monitor the QoS in the entire delivery path.

Dedicated devices, called network probes, are typically used to monitor QoS of video delivery in various points in the network. They are usually installed in selected locations over the network, including selected final points of delivery of service. Therefore, network operators need to invest in dedicated network probes and choose carefully where to deploy them in order to maximize the visibility and gains. The more dedicated network probes are installed, the better information about QoS across the network can be obtained by the ISP. However, such network probes are not able to detect all QoS issues, but only issues related to the part of the network that they are installed in. Deploying dedicated network probes raises the following problems: need to plan for deployment place up front, lack of elasticity when deciding which segments need to be monitored, cost of purchasing and maintenance of dedicated hardware, not always easy or convenient to deploy inside customer premises, increased operational costs of hardware deployment

### SUMMARY OF THE INVENTION

There is a need to improve the current IP network infrastructure, in particular the infrastructure of the IP network that is used to deliver IPTV (in view of high amount of data transmitted), that would allow to monitor QoS with a high accuracy, in order to monitor as large portion of the network as possible and/or to solve at least some of the problems associated with the dedicated network probes as described in the background section.

The object of the invention is a customer premises equipment comprising a controller and a data reception block configured for reception of internet protocol television (IPTV) streams, wherein the controller is configured to operate a software network probe that is configured to monitor received IPTV streams with quality metrics.

Preferably, the software network probe is configured to perform a network test for on-demand check of at least one of: latency towards dedicated delivery network points, DNS name resolution results and timings and speed tests between the CPE and dedicated network points.

Preferably, the software network probe is further configured to provide continuous monitoring packet transmission characteristics, including User Datagram Protocol (UDP) packet loss, between the CPE and dedicated points of an IP network to which the CPE is connected.

Preferably, the software network probe is further configured to continuously monitor local network conditions for LAN and wireless networks in customer premises wherein the CPE operates.

Preferably, the software network probe is further configured to forward results of monitoring to a centralized monitoring backend.

Preferably, the software network probe is further configured to visualize the results of monitoring.

Preferably, the network probe is configured to communicate with the data reception block receiving IP data via packet capture in promiscuous mode.

Preferably, the network probe is configured to read audio/video metrics directly from the audio/video block.

Another object of the invention is a method for monitoring quality of service in an Internet Protocol Television (IPTV) content delivery network, wherein the network comprises customer premises equipment, the method being characterized by installing on at least some of the CPEs a software network probe that is configured to monitor IPTV streams received at the CPE with quality metrics.

The invention also relates to a system for delivering Internet Protocol Television (IPTV) over a content delivery network, comprising a plurality of customer premises equipment, wherein at least some of the CPEs are the CPEs as described herein, and the system further comprises a network probe server communicating with network probes of the CPEs.

Preferably, the system further comprises at least one gateway with a controller configured to operate a software network probe that is configured to monitor network interface properties and traffic statistics on the Wide Area Network and Local Area Network side.

Preferably, the software network probe of the at least one gateway is further configured to perform on-demand network tests communicating with Network Probe Server and/or a network probes of the CPEs.

The present invention enables network probe functionality on already existing customer premises equipment (CPE) that is deployed and used in operator's network, namely Set Top Boxes and Broadband Gateways. The present invention covers QoS monitoring MPEG-TS and multicast properties in IPTV networks, as well as provides a suite of dedicated network tests to continuously monitor transmission quality.

The network probe modules of the invention allow elastic and on-demand deployment of probes in network segments where there are most needed and dynamic turning on and off of probes to assist in troubleshooting. Monitoring QoS on CPEs is more likely to reflect the actual user experience since it accounts for last mile and customer premises network quality.

### BRIEF DESCRIPTION OF DRAWINGS

The invention is shown by means of example embodiments on a drawing, wherein:
Fig. 1 shows an example of an infrastructure of an IPTV network with CPE probes according to the invention;
Fig. 2 shows an example of an infrastructure of a unicast delivery network with CPE probes according to the invention;
Fig. 3 shows an example of a customer premises equipment structure, including a software network probe module.
Fig. 4 shows an example of a gateway structure, including a software network probe module.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually, these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DETAILED DESCRIPTION

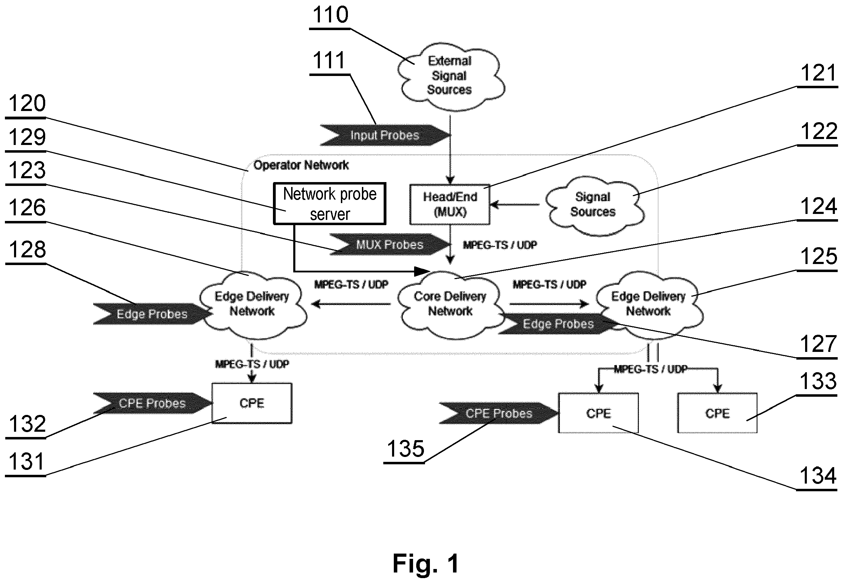

Fig. 1 shows an example of an infrastructure of an IPTV network with CPE probes according to the invention. An operator network 120 is configured over an IP network to gather and deliver IPTV content. The content is provided from external signal sources 110 that are external to the IP network (such as cable or satellite content delivery networks) and from signal sources 122 within the IP network (such as streaming servers operating within the IP network). The content is received by a headend multiplexer 121 that generates IPTV streams, for example in MPEG-TS/UDP (Transport Stream / User Datagram Protocol) format. A core delivery network 124 distributes the streams to edge delivery networks 125, 126 (such as local networks, e.g., IPTV operator network across a hotel building or residential network), via which the content is received by customer premises equipment (CPE), such as STBs, 131, 133, 134. Dedicated network probes are installed at various points of the network infrastructure, as well known in the art, including input probes 111, multiplexer probes 123 and edge probes 132, 135.

In addition to the standard infrastructure as described above, at least some of the CPEs 131, 134 have embedded CPE network probes 132, 135 according to the present invention, as will be explained below. The network probes 132, 135 communicate with a network probe server 129 via the content delivery network or another network independent from content delivery.

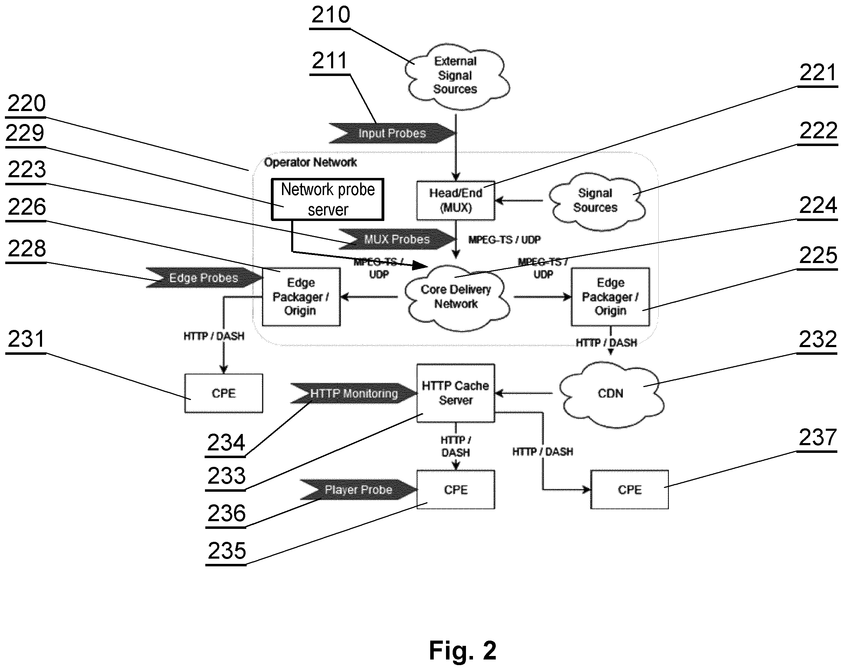

Fig. 2 shows an example of an infrastructure of a unicast delivery network with CPE probes according to the invention. An operator network 220 is configured over an IP network to gather and deliver IPTV content. The content is provided from external signal sources 210 that are external to the IP network (such as cable or satellite content delivery networks) and from signal sources 222 within the IP network (such as streaming servers operating within the IP network). The content is received by a headend multiplexer 221 that generates IPTV streams, for example in MPEG-TS/UDP format. A core delivery network 224 distributes the streams to edge packager / original modules 225, 226, via which the content is received by customer premises equipment (CPE), such as STBs, 231, and external content delivery networks (CDNs) 232. The CDNs deliver content to HTTP cache servers 233, via which it is distributed to CPEs 235, 237. Dedicated network probes are installed at various points of the network infrastructure, as well known in the art, including input probes 211, multiplexer probes 223, edge probes 228 and HTTP monitoring probes 234.

In addition to the standard infrastructure as described above, at least some of the CPEs 235 have embedded CPE network probes (also called player probes) 236 according to the present invention, as will be explained below. The network probes 236 communicate with a network probe server 229 via the content delivery network or another network independent from content delivery.

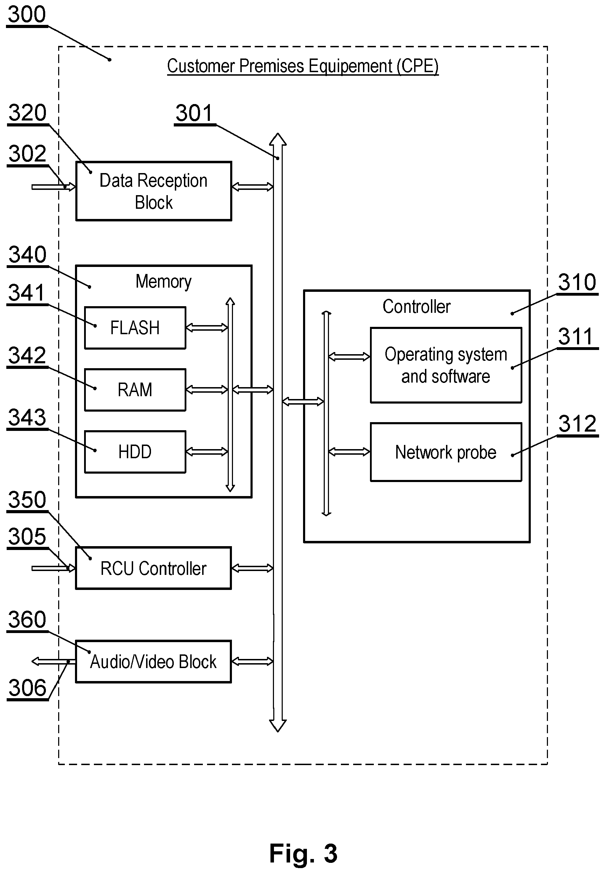

Fig. 3 shows a functional schematic of a customer premises equipment (CPE) 300 comprising a software network probe according to the invention.

The CPE 300 operates utilizing memory blocks 340, including RAM 342, Flash 341 blocks and a hard disk drive (HDD) 343 or another type of mass storage that can be used to store video or other data locally at the CPE, but is not essential for its operation. The operation of the CPE 300 is managed by a controller 310 comprising operating system and standard software 311.

A data reception block 320 is configured to receive downstream data 302, such as video content, from the broadcasting distribution network. The data reception block 320 (also called a front-end block) comprises an IPTV interface, and may further comprise other network type interfaces (such as satellite, cable, terrestrial tuners), wherein one of the interfaces receives content to be displayed at the television screen to which the CPE is directly connected (e.g. the CPE 300 connected to a TV set) and another tuner receives content to be recorded at the HDD 343.

The CPE is operable by the user via a remote control unit (RCU) that communicates, typically via an infrared (IR) receiver receiving an IR signal 305, with a RCU controller block 350.

An audio/video block 360 is an example of a content presentation block and configured to decode the received content in response to, among others, the operation of the user interface (Ul) display unit 314, convert it to an audio/video format suitable for presentation to the user, and to transmit the converted content via a transmission channel 306 to the TV set to which the CPE is directly connected.

All modules of the CPE communicate with each other via one or more internal data buses 301.

Furthermore, the controller 310 comprises a network probe module 312. The network probe module 312 is a software application stored in the flash memory 341 and executed by the controller. It can be one of applications executed by the operating system 311 or an application of a different software layer than the operating system 311. Therefore, the network probe module 312 can be easily updated by the CPE operator via the data reception block 320, including the IP network interface. The network probe module 312 can be pre-installed on the CPE or, in case of CPEs already operating and not containing the network probe module 312, can be installed on demand as an additional module to improve the functionality of currently operating CPEs.

The network probe 312 can be configured to communicate with the data reception block 320 receiving IP data via packet capture in promiscuous mode. Consequently, the data reception block 320 informs the network probe 312 about all network traffic. The network probe 312 is able to filter audio/video traffic from the whole traffic and provide quality metrics for the audio/video traffic.

Alternatively, if the audio/video block 360 provides relevant quality metrics, these metrics can be read directly by the network probe module 312 from the audio/video block 360 - such approach reduces the workload on the data reception block 320 and usage of controller 310 (CPU) resources resulting from filtering incoming traffic.

The network probe module 312 is configured to continuously monitor incoming IPTV streams (e.g., MPEG Transport Streams) with quality metrics (such as jitter, intra packet arrival times, continuity counter errors). Moreover, it can be configured to perform a suite of network tests for on-demand checks of at least one of: latency towards dedicated delivery network points, DNS name resolution results and timings, speed tests between the CPE and dedicated network points. It can further provide continuous monitoring packet transmission characteristics (such as UDP packet loss) between CPE and dedicated network points. Further, the network probe module 312 can be configured for continuous monitoring local network conditions for LAN and Wireless networks in customer premises. In general, the network probe module 312 is configured for various diagnostic and on-demand troubleshooting actions to be triggered from monitoring backend. Apart from forwarding results of the above to a centralized monitoring backend, the results of tests performed by the network probe module 312 can be also visualized by means the CPE.

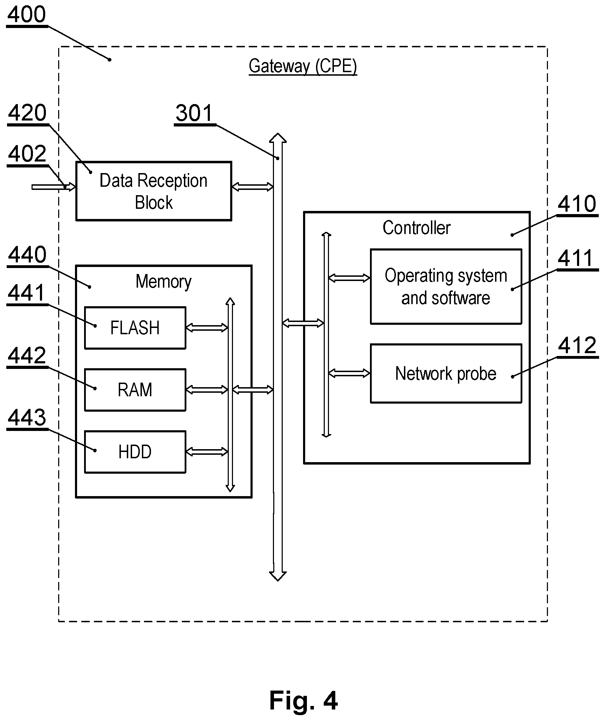

Fig. 4 shows a functional schematic of a gateway 400 comprising a software network probe according to the invention.

The gateway 400 operates utilizing memory blocks 440, including RAM 442, Flash 441 blocks and a hard disk drive (HDD) 443 or another type of mass storage that can be used to store data locally at the gateway, but is not essential for its operation. The operation of the gateway 400 is managed by a controller 410 comprising operating system and standard software 411.

A data reception block 420 is configured to receive downstream data 402, such as video content, from the broadcasting distribution network. The data reception block 420 (also called a front-end block) comprises an IPTV interface. The data reception block 420 transmits the received data via another interface to other devices, such as the CPEs.

All modules of the gateway 400 communicate with each other via one or more internal data buses 401.

Furthermore, the gateway controller 410 comprises a network probe module 412. The network probe module 412 is a software application stored in the flash memory 441 and executed by the controller. It can be one of applications executed by the operating system 411 or an application of a different software layer than the operating system 411. Therefore, the network probe module 412 can be easily updated by the CPE operator via the data reception block 420, including the IP network interface. The network probe module 412 can be pre-installed on the gateway or, in case of gateways already operating and not containing the network probe module 412, can be installed on demand as an additional module to improve the functionality of currently operating gateways.

The network probe module 412 is configured to monitor network interface properties and traffic statistics on the WAN (Wide Area Network) and LAN (Local Area Network) side and to perform on-demand network tests communicating with Network Probe Server 129, 229 and/or the network probe module 312 of the CPE.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A customer premises equipment (CPE) comprising a controller (310) and a data reception block (320) configured for reception of internet protocol television (IPTV) streams, **characterized in that** the controller is configured to operate a software network probe (312) that is configured to monitor received IPTV streams with quality metrics.

2. The CPE according to claim 1, wherein the software network probe (312) is configured to perform a network test for on-demand check of at least one of: latency towards dedicated delivery network points, DNS name resolution results and timings and speed tests between the CPE and dedicated network points.

3. The CPE according to any of previous claims, wherein the software network probe (312) is further configured to provide continuous monitoring packet transmission characteristics, including User Datagram Protocol (UDP) packet loss, between the CPE and dedicated points of an IP network to which the CPE is connected.

4. The CPE according to any of previous claims, wherein the software network probe (312) is further configured to continuously monitor local network conditions for LAN and wireless networks in customer premises wherein the CPE operates.

5. The CPE according to any of previous claims, wherein the software network probe (312) is further configured to forward results of monitoring to a centralized monitoring backend.

6. The CPE according to any of previous claims, wherein the software network probe (312) is further configured to visualize the results of monitoring.

7. The CPE according to any of previous claims, wherein the network probe (312) is configured to communicate with the data reception block (320) receiving IP data via packet capture in promiscuous mode.

8. The CPE according to any of previous claims, wherein the network probe (312) is configured to read audio/video metrics directly from the audio/video block (360).

9. A method for monitoring quality of service (QoS) in an Internet Protocol Television (IPTV) content delivery network, wherein the network comprises customer premises equipment (CPE) (131, 133, 134, 235, 237), **characterized by** installing on at least some of the CPEs (131, 134, 235) a software network probe (312) that is configured to monitor IPTV streams received at the CPE with quality metrics.

10. A system for delivering Internet Protocol Television (IPTV) over a content delivery network, comprising a plurality of customer premises equipment (CPE) (131, 133, 134, 235, 237), **characterized in that** at least some of the CPEs (131, 134, 235) are the CPEs according to any of claims 1-8 and the system further comprises a network probe server (129, 229) communicating with network probes (312) of the CPEs (131, 134, 235).

11. The system according to claim 10, further comprising at least one gateway (400) with a controller (420) configured to operate a software network probe (412) that is configured to monitor network interface properties and traffic statistics on the Wide Area Network (WAN) and Local Area Network (LAN) side.

12. The system according to claim 11, wherein the software network probe (412) of the at least one gateway (400) is further configured to perform on-demand network tests communicating with Network Probe Server (129, 229) and/or a network probes (312) of the CPEs (131, 134, 235).
